# FASCICULE DE BREVET EUROPEEN

(11) **EP 0 493 198 B1**
(45) Date de publication et mention de la délivrance du brevet: **04.10.1995**
(21) Numéro de dépôt: 91403440.0
(22) Date de dépôt: 18.12.1991
(51) Int. Cl.: G05G 5/24, B60N 2/02

(54) **Vérin de positionnement à vis et à noyau pivotant évidé**
Schraubstellvorrichtung mit einem ausgesparten schwenkbaren Kern
Positioning screw jack with a recessed, pivotable core

(30) Priorité: 26.12.1990 FR 9016264
(43) Date de publication de la demande: 01.07.1992
(73) Titulaire: BERTRAND FAURE AUTOMOBILE "B.F.A.", F-91300 Massy (FR)
(72) Inventeur: Droulon, Georges, F-61100 Flers (FR)
(74) Mandataire: Madeuf, René Louis

(56) Documents cités:
- EP-A- 0 265 316
- GB-A- 150 560
- US-A- 3 757 591

## Description

La présente invention a pour objet un vérin mécanique de positionnement qui peut être utilisé d'une manière simple, pratique pour le réglage du positionnement discontinu d'un dossier de siège, le réglage en hauteur d'une assise de siège, le réglage en hauteur d'un appui-tête de siège, le déplacement d'une glissière pour le positionnement longitudinal d'un siège, en particulier de siège de véhicule et plus spécialement de véhicule automobile.

On est amené de plus en plus à prévoir, pour les véhicules automobiles, même de gamme inférieure, des équipements de sièges pour le conducteur et le passager avant, constitués par des éléments de réglage, afin de mettre chaque siège en conformité avec la morphologie du passager pour éviter la fatigue inhérente au transport.

Or, le réglage longitudinal du siège au moyen de glissières, le réglage d'inclinaison du dossier, le réglage du coussin sous-cuisses placé à l'avant de l'assise du siège, le réglage du coussin lombaire et finalement le réglage de la têtière, nécessitent l'emploi de mécanismes assez coûteux et qui présentent tous l'inconvénient de créer des sensations désagréables, car les jeux de ces mécanismes inhérents à la fabrication ne peuvent pas tous être compensés.

C'est pourquoi on a été amené à étudier des mécanismes simples, bon marché et sans jeu, permettant de réaliser les réglages sus-indiqués.

La présente invention a donc pour objet un vérin mécanique de positionnement à déplacement pas à pas, c'est-à-dire réalisant un positionnement discontinu, même sans jeu, assurant ainsi le confort maximum au passager.

On connaît notamment par US-A-3 757 591 qui constitue l'état de la technique antérieure le plus proche un vérin mécanique de positionnement constitué par une tige filetée coopérant avec un écrou et comportant, à l'une de ses extrémités, une tête aplatie, percée d'un organe de liaison, l'écrou étant percé diamétralement de deux canaux, l'un taraudé et l'autre à paroi lisse mais faisant avec le premier canal un angle voisin de 15°, l'écrou étant susceptible d'être pivoté par un moyen de commande pour dégager ou engager respectivement les taraudages du canal central avec le filetage de la tige.

Ce qui précède a été utilisé pour énoncer le préambule de la revendication principale annexée.

Conformément à l'invention, l'écrou est placé à l'intérieur d'un carter, la distance entre la tête aplatie et le carter étant variable et l'écrou comportant une queue solidaire de sa paroi externe, coopérant avec un ressort spiral bloqué entre la queue et le carter, ce dernier comportant, sur sa partie arrière, deux axes, destinés à sa fixation sur la partie fixe de l'élément à déplacer.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une élévation latérale du mécanisme de positionnement discontinu.

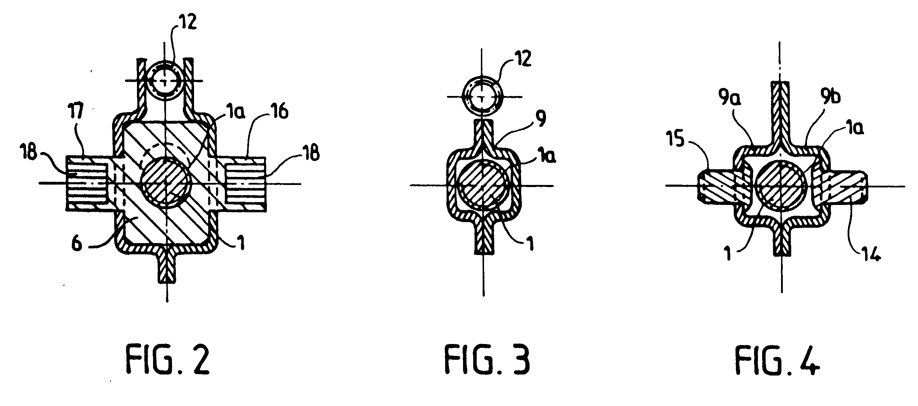

La fig. 2 est une coupe suivant la ligne II-II de la fig. 1.

La fig. 3 est une coupe suivant la ligne III-III de la fig. 1.

La fig. 4 est une coupe suivant la ligne IV-IV de la fig. 1.

La fig. 5 est un plan correspondant à la fig. 1.

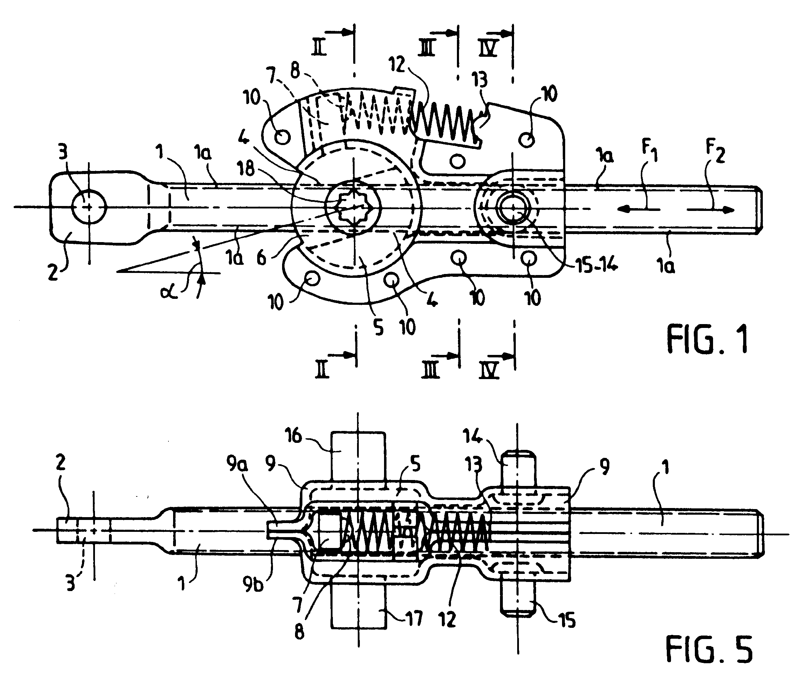

A la fig. 1, on a représenté la tige 1 de longueur variable d'un vérin constituant un mécanisme de positionnement discontinu, cette tige de vérin 1 étant filetée sur son pourtour en 1a est donc cylindrique.

L'extrémité avant de la tige 1 est aplatie pour former une tête 2 percée d'un trou 3, destiné à la fixation de la tige 1 sur l'organe mobile du siège, soit à déplacement longitudinal (par exemple une glissière), soit à déplacement angulaire (réglage d'inclinaison d'un dossier de siège).

La tige 1 traverse le canal central 4 d'un écrou 5, présentant également un autre canal 6, mais faisant un angle α (voir fig. 1) par rapport au canal central 4. L'angle α est en général voisin de 15°.

Les bords du deuxième canal 6, inclinés suivant l'angle α, sont lisses tandis que les bords du canal central 4 sont taraudés pour coopérer avec le filetage circulaire 1a de la tige 1.

L'écrou central 5 présente, à sa partie supérieure, une queue 7 comportant, sur une de ses faces latérales, un bossage 8 dont le rôle sera expliqué plus loin.

L'écrou 5 est placé à l'intérieur d'un carter 9, constitué le plus souvent par deux demi-coquilles 9a, 9b, fixées l'une à l'autre par tout moyen convenable et, dans le cas présent, par des rivets 10.

La partie supérieure du carter 9, qui est plus étroite que la partie contenant l'écrou 5, contient un ressort spiral 12 prenant appui, à l'avant sur le bossage 8 de la queue 7, et à l'arrière sur un bossage 13 solidaire du carter.

Ce carter présente, sur sa partie arrière, deux axes de fixation 14, 15 destinés à relier ce carter à une partie fixe du siège, par exemple, l'armature de celle-ci lorsqu'il s'agit de faire varier, au moyen de la tige 1, l'inclinaison du dossier du siège considéré.

Finalement il y a lieu de signaler que la zone centrale de l'écrou 5 comporte deux bossages externes 16, 17, percés d'un canal central 18 traversant les bossages 16, 17 et l'écrou 5. Ce canal central 18 est cannelé comme celà est visible à la fig. 1.

Le canal central 18 est destiné à recevoir un arbre muni d'une poignée de manoeuvre ou un moteur non représenté au dessin.

Dans la position représentée à la fig. 1, les taraudages du canal central 4, ayant pénétré dans le filetage 1a de la tige 1, cette dernière est bloquée dans la position représentée.

Si l'on décide de débloquer la tige 1, on fait pivoter l'écrou 5 à l'aide de l'arbre de manoeuvre présent à travers le canal central 18, afin de faire pivoter l'écrou 5 d'un angle α et, à ce moment, les parois du canal 6 étant lisses et les parois du canal central 4 étant libres, donc ayant dégagé le filetage 1a de la tige 1, on peut aisément déplacer cette tige, soit dans le sens de la flèche F1 soit dans le sens de la flèche F2 (voir fig. 1) et permettre ainsi le réglage de l'organe dont on décide de modifier la position.

La rotation de l'écrou 5 s'est effectuée en comprimant le ressort 12 entre les bossages 8 et 13 sous l'action de la queue 7 qui a pivoté en même temps que l'écrou 5. Dès la position choisie atteinte de l'organe du siège à régler, on relâche l'effort sur l'arbre passant à travers le canal 18, le ressort 12 se détend et ramène l'écrou 5 dans la position première, c'est-à-dire que cet écrou pivote d'un angle α dans le sens contraire au sens précédent et que les dentures du canal central 4 ont, de nouveau, pénétré dans le filetage 1a de la tige 1 en bloquant celle-ci fermement sous l'action de la poussée du ressort spiral 12.

## Revendications

1. Vérin mécanique de positionnement constitué par une tige filetée (1) coopérant avec un écrou (5) et comportant, à l'une de ses extrémités, une tête aplatie, percée d'un organe de liaison, l'écrou (5) étant percé diamétralement de deux canaux, l'un taraudé (4) et l'autre (6) à paroi lisse mais faisant avec le premier canal (4) un angle voisin de 15°, l'écrou étant susceptible d'être pivoté par un moyen de commande pour dégager ou engager respectivement les taraudages du canal central (4) avec le filetage (la) de la tige (1),
**caractérisé en ce que**
l'écrou (5) est placé à l'intérieur d'un carter (9), la distance entre la tête aplatie (2) et le carter (9) étant variable et l'écrou (5) comportant une queue (7) solidaire de sa paroi externe, coopérant avec un ressort spiral (12) bloqué entre la queue (7) et le carter (9), ce dernier comportant, sur sa partie arrière, deux axes (14,15), destinés à sa fixation sur la partie fixe de l'élément à déplacer.

2. Vérin mécanique suivant la revendication 1, caractérisé en ce que l'écrou (5) comporte latéralement des bossages centraux (16, 17) présentant chacun un canal cannelé (18) pour l'emmanchement de l'arbre de commande du vérin mécanique.

## Patentansprüche

1. Mechanische Verstellvorrichtung, mit einer Gewindestange (1), die mit einer Mutter (5) zusammenwirkt und an einem ihrer Endstücke einen abgeflachten Kopf aufweist, der von einem Verbindungsorgan durchsetzt ist, wobei die Mutter (5) diametral von zwei Durchlässen durchsetzt ist, von denen der eine (4) mit einem Innengewinde versehen ist und der andere (6) eine glatte Wand aufweist, aber mit dem erstgenannten Durchlaß (4) einen Winkel von ungefähr 15° bildet, wobei die Mutter durch ein Betätigungsorgan schwenkbar ist, um das Innengewinde des zentralen Durchlasses (4) mit dem Gewinde (la) der Stange (1) außer bzw. in Eingriff zu bringen,
dadurch **gekennzeichnet,** daß
die Mutter (5) im Innern eines Gehäuses (9) angeordnet ist, der Abstand zwischen dem abgeflachten Kopf (2) und dem Gehäuse (9) veränderbar ist, und die Mutter (5) einen mit ihrer Außenwand fest bzw. einstückig verbundenen Vorsprung (7) aufweist, der mit einer zwischen dem Vorsprung 7 und dem Gehäuse (9) eingespannten Schraubenfeder (12) zusammenwirkt, wobei das Gehäuse an seinem hinteren Abschnitt zwei Achsen (14, 15) aufweist, die zu seiner Befestigung am feststehenden Abschnitt des zu verstellenden Bauteils bestimmt sind.

2. Mechanische Verstellvorrichtung nach Anspruch 1,
dadurch **gekennzeichnet,** daß
die Mutter (5) seitlich zentrale Ansätze (16, 17) aufweist, die je mit einem mit Vielnutprofil versehenen Durchlaß (18) zum Einstecken der Betätigungswelle der mechanischen Verstellvorrichtung versehen sind.

## Claims

1. Mechanical positionning jack made of a threaded rod (1) cooperating with a nut (5) and comprising, at one of its ends, a flattened head pierced with a connecting element, the nut (5) being diametrally pierced with two channels, one (4) being tapped and the other (6) having a smooth wall but forming with the first channel (4) an angle about 15°, the nut being able to be pivoted by a control means for disengaging or engaging respectively the tappings of the central channel (4) with the thread (1a) of the rod (1),
characterized in that
the nut (5) is positioned within a casing (9), the distance between the flattened head (2) and the casing (9) being variable and the nut (5) comprising a tail (7) rigidly connected with its outer wall, cooperating with a spiral spring (12) blocked between the tail (7) and the casing (9), the latter comprising, on its rear portion, two pins (14, 15) provided for the fixing thereof on the fixed portion of the element to be moved.

2. Mechanical jack according to claim 1, characterized in that the nut (5) is laterally provided with central protrusions (16, 17), each having a fluted channel (18) for fitting the control shaft of the mechanical jack.
